# EUROPEAN PATENT SPECIFICATION

(11) **EP 3 272 515 B1**
(45) Date of publication and mention of the grant of the patent: **06.10.2021**
(21) Application number: 17174515.1
(22) Date of filing: 06.06.2017
(51) Int. Cl.: B32B 3/20, B32B 3/12, B32B 27/10, B32B 27/08, B32B 29/00, B32B 3/04, B32B 3/06

(54) **LAYERED BOARD**
GESCHICHTETE PLATTE
PLAQUE STRATIFIÉE

(30) Priority: 20.07.2016 JP 2016142172
(43) Date of publication of application: 24.01.2018
(73) Proprietor: Meiwa Industry Co., Ltd., Atsugi-shi, Kanagawa 243-0003 (JP)
(72) Inventor: NOTO, Shinya, Kanagawa, 243-0003 (JP)
(74) Representative: Viering, Jentschura & Partner mbB Patent- und Rechtsanwälte

(56) References cited:
- EP-A2- 0 628 406
- EP-A2- 0 786 330
- DE-A1-102008 062 678
- US-A1- 2012 100 337
- US-A1- 2013 089 693

## Description

### BACKGROUND OF THE INVENTION

### FIELD OF THE INVENTION

The present invention relates to a layered board.

### DESCRIPTION OF THE RELATED ART

Japanese Patent No. 4270625 (hereinafter, referred to as Patent Literature 1) discloses a layered board in which a foam body is placed between two resin plate members. The foam body described in Patent Literature 1 is made of a thermoplastic foam material such as foamed polyethylene.

The layered board disclosed in Patent Literature 1 may cause a reduction in rigidity of the thermoplastic foam body when the layered board including the foam body is subjected to high temperature.
EP 0 628 406 A2 discloses a layered board comprising: a first panel and a second panel each made of a thermoplastic material; and a reinforcing body placed between the first panel and the second panel, the reinforcing body being a cylinder assembly including plural rows of cylinders made of paper arranged in parallel; and a first sheet is placed between the first panel and the cylinder assembly, and a second sheet is placed between the second panel and the cylinder assembly, wherein an axial direction of the cylinders composing the cylinder assembly conforms to a direction intersecting a plane direction of the first sheet and the second sheet; one side of the first sheet is attached to the cylinder assembly and another side is welded to the first panel via a thermoplastic material; one side of the second sheet is attached to the cylinder assembly and another side is welded to the second panel via a thermoplastic material. EP 0 786 330 A2, US 2013/0898693 A1, US 2012/100337 A1, and DE 10 2008 062 678 A1 discloses some further known devices.

### SUMMARY OF THE INVENTION

An object of the present invention is to provide a layered board with high rigidity resistant to high temperature conditions.

According to the present invention, a layered board as defined by claim 1 is provided. The dependent claims show some examples thereof. A layered board according to the present invention includes: a first panel and a second panel each made of a thermoplastic material; and a reinforcing body placed between the first panel and the second panel. The reinforcing body is a cylinder assembly including plural rows of cylinders made of paper arranged in parallel.

The reinforcing body according to the present invention is the cylinder assembly made of paper. Paper has higher resistance to heat than resin. Thus, the layered board including the reinforcing body made of paper has higher rigidity resistant to high temperature conditions than a layered board including a reinforcing body made of resin.

### BRIEF DESCRIPTION OF DRAWINGS

FIG. 1 is a perspective rear view of a vehicle provided with a trunk board according to a first embodiment of the present invention.
FIG. 2 is a perspective view of the trunk board shown in FIG. 1
FIG. 3A is a cross-sectional view taken along line A-A in FIG. 2.
FIG. 3B is a cross-sectional view taken along line B-B in FIG. 2.
FIG. 4 is an exploded cross-sectional view of the trunk board shown in FIG. 3B.
FIG. 5A is a perspective view of a reinforcing body as a honeycomb structure.
FIG. 5B is a cross-sectional view taken along line C-C in FIG. 5A.
FIG. 6A is a cross-sectional view for explaining the step of molding the trunk board according to the first embodiment, showing a state in which an intermediate molded body is placed in a metal mold.
FIG. 6B is a cross-sectional view for explaining the step of molding the trunk board according to the first embodiment, showing a state in which an upper metal piece of the metal mold comes down.
FIG. 7A is a cross-sectional view for explaining the step of cutting in the thickness direction a paper honeycomb structure obtained such that a first sheet and a second sheet are attached to the honeycomb structure, showing a state in which a cutting knife is positioned above the paper honeycomb structure.
FIG. 7B is a cross-sectional view for explaining the step of cutting the paper honeycomb structure in the thickness direction, showing a state in which the upper surface of the paper honeycomb structure is slit with the cutting knife.
FIG. 7C is a cross-sectional view for explaining the step of cutting the paper honeycomb structure in the thickness direction, showing a state in which the paper honeycomb structure is cut off with the cutting knife.
FIG. 8A is a cross-sectional view for explaining the step of cutting the honeycomb structure in the thickness direction, showing a state in which the cutting knife is positioned above the honeycomb structure.
FIG. 8B is a cross-sectional view for explaining the step of cutting the honeycomb structure in the thickness direction, showing a state in which the upper surface of the honeycomb structure is slit with the cutting knife.
FIG. 8C is a cross-sectional view for explaining the step of cutting the honeycomb structure in the thickness direction, showing a state in which the honeycomb structure is cut off by the cutting knife.
FIG. 9 is a cross-sectional view of an end portion of a trunk board according to a second embodiment of the present invention.
FIG. 10 is a perspective top view of a trunk board according to a third embodiment of the present invention, showing the cross section of the circumference of the trunk board.
FIG. 11A is a perspective view of a flat panel and a wavelike panel made of paper and composing part of a cylinder assembly according to another embodiment.
FIG. 11B is a perspective view of the cylinder assembly including a plurality of flat panels and a plurality of wavelike panels arranged alternately.

### DESCRIPTION

Hereinafter, the present invention will be described with reference to the drawings. In the drawings, the sign FR indicates the vehicle front side, the sign RR indicates the vehicle rear side, and the sign W indicates the vehicle width direction. Each of trunk boards (layered boards) 9, 109, and 209 described below may be used with either the upper surface or the lower surface facing upward.

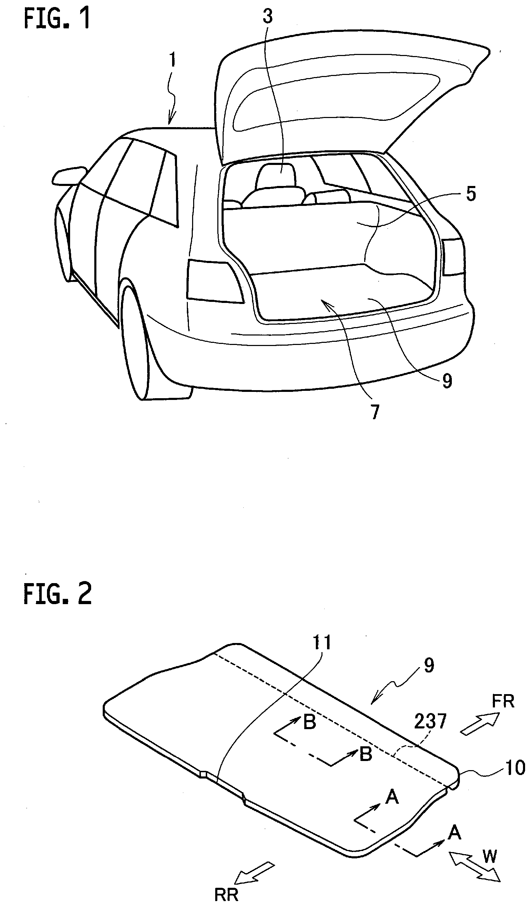

A layered board used as a trunk board is described below. As shown in FIG. 1, a vehicle 1 includes front seats 3 and rear seats 5 in a passenger compartment. The vehicle 1 has a trunk space 7 behind the rear seats 5. The trunk space 7 includes a recessed space (not shown) under the floor for housing accessories such as a spare tire and a tool kit therein. The opening of the recessed space on the upper side is covered with a trunk board 9 (a layered board).

As shown in FIG. 2, the trunk board 9 is formed into a substantially rectangular plate shape in a plan view and made from synthetic resin as described below. The trunk board 9 in the installed state has a recess 11 at the rear edge recessed forward in the middle in the vehicle width direction. A gap is thus provided between the recess 11 and the vehicle body when the trunk board 9 is fitted onto the recessed space in the vehicle 1. Upon detaching the trunk board 9, the user inserts the hand into the gap at the recess 11 and then lifts the trunk board 9 upward. A hinge 237 is elongated in the vehicle width direction. The corners 10 of the trunk board 9 on the vehicle front side FR are rounded off in a plan view.

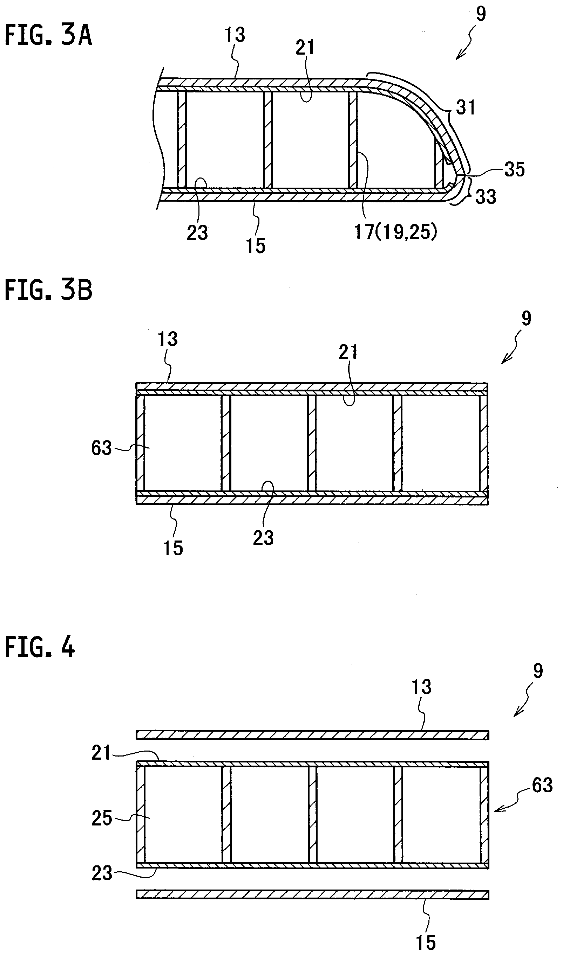

Next, the structure of the trunk board 9 (the layered board) is described below with reference to FIG. 3 to FIG. 5.

As shown in FIG. 3A, FIG. 3B, and FIG. 4, the trunk board 9 includes first and second panels 13 and 15 made of a thermoplastic material, and a reinforcing body 17 placed between the first and second panels 13 and 15. The reinforcing body 17 is a cylinder assembly 19 in which plural rows of cylinders made of paper are arranged in parallel. A first sheet 21 is placed between the first panel 13 and the cylinder assembly 19, and a second sheet 23 is placed between the second panel 15 and the cylinder assembly 19, wherein an axial direction of the cylinders (29) composing the cylinder assembly (19) conforms to a direction intersecting a plane direction of the first sheet (21) and the second sheet (23); one side of the first sheet (21) is attached to the cylinder assembly (19) and another side is welded to the first panel (13, 113) via a thermoplastic material; one side of the second sheet (23) is attached to the cylinder assembly and another side is welded to the second panel (15, 115) via a thermoplastic material.

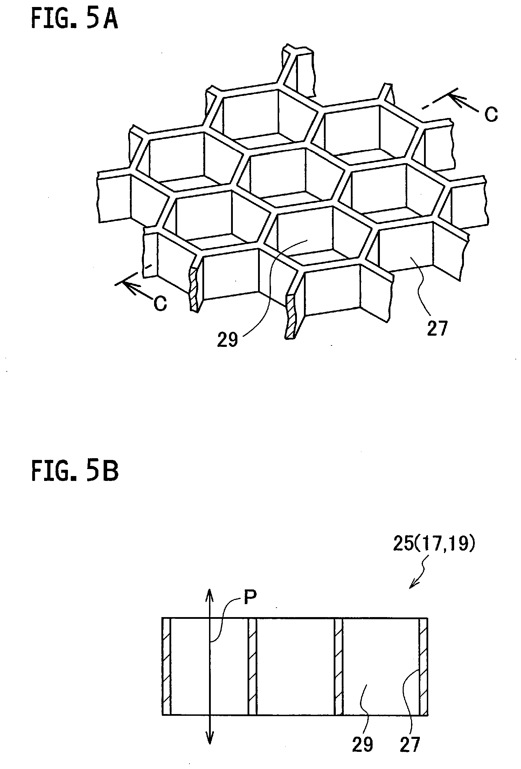

The cylinder assembly 19 (the reinforcing body 17) formed into a honeycomb structure 25 shown in FIG. 5 is arranged in the middle in the thickness direction of the trunk board 9. As shown in FIG. 5A, the cylinder assembly 19 is the honeycomb structure 25 in which vertical walls 27 defining cylinders 29 each having a hexagonal shape in a plan view are connected to each other. Each of the cylinders 29 penetrates in the axial direction to have openings on the upper and lower sides. As shown in FIG. 5B, the axial line P in the extending direction (the axial direction) of the respective cylinders 29 composing the honeycomb structure 25 is parallel to the thickness direction of the honeycomb structure 25 and conforms to the direction perpendicular to (intersecting) the horizontal plane of the first sheet 21 and the second sheet 23.

The first sheet 21 is attached to the upper side of the honeycomb structure 25, as shown in FIG. 3A, FIG. 3B, and FIG. 4. In particular, the first sheet 21 includes a paper material such as kraft paper, and a thermoplastic layer (not shown) placed on the upper surface of the paper material.

The first panel 13 is welded to the upper side of the first sheet 21 with the thermoplastic layer interposed therebetween. Preferred examples of thermoplastic resin included in the first panel 13, the thermoplastic layer, and the second panel 15 described below include polypropylene, engineering plastic, low-density polyethylene, high-density polyethylene, linear low-density polyethylene, and olefin resin. More particularly, a material in which an additive is added to polypropylene is preferable. Examples of additives include mica, silica, talc, calcium carbonate, glass fibers, inorganic fillers such as carbon fibers, a colorant, a stabilizer, a plasticizer, an antistatic agent, a flame retardant, and a blowing agent. The resin included in the first panel 13, the resin included in the second panel 15, the resin bonding the first sheet 21 and the first panel 13, and the resin bonding the second sheet 23 and the second panel 15 are particularly preferably of the same type. However, the present invention is not limited thereto, and the respective resin materials may be different from each other.

The first sheet 21 on one side is attached to the honeycomb structure 25 (the cylinder assembly 19) with an adhesive, and the first sheet 21 on the other side is welded to the first panel 13 with the thermoplastic layer interposed therebetween.

The second sheet 23 is attached to the lower side of the honeycomb structure 25, as shown in FIG. 3A, FIG. 3B, and FIG. 4. In particular, the second sheet 23 includes a paper material such as kraft paper, and a thermoplastic layer (not shown) located on the lower surface of the paper material.

The second panel 15 is welded to the lower side of the second sheet 23 with the thermoplastic layer interposed therebetween.

The second sheet 23 on one side is attached to the honeycomb structure 25 (the cylinder assembly 19) with an adhesive, and the second sheet 23 on the other side is welded to the second panel 15 with the thermoplastic layer interposed therebetween.

As shown in FIG. 3A, the end of the first panel 13 has a curved surface 31 curved toward the end of the second panel 15 on the periphery of the trunk board 9. The end of the second panel 15 has a curved surface 33 curved toward the end of the first panel 13. The edge of the curved surface 31 of the first panel 13 and the edge of the curved surface 33 of the second panel 15 are directly welded together to provide a welded portion 35. Although the welded portion 35 is provided along the periphery of the trunk board 9, the present invention is not limited thereto, and the welded portion may be provided in part of the periphery of the trunk board 9.

Next, the process of manufacturing the trunk board described below.

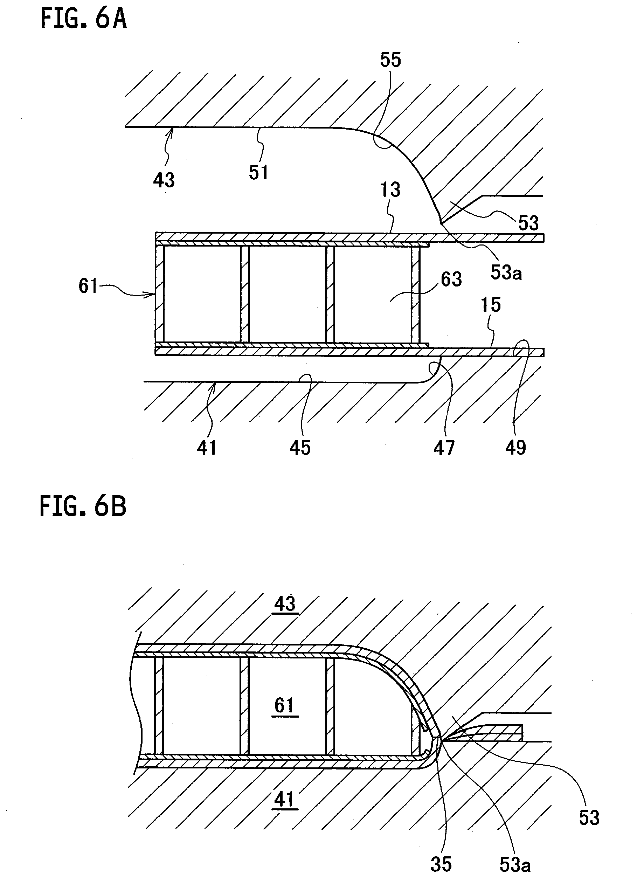

As shown in FIG. 6A, a metal mold used for preparing the trunk board 9 includes a lower metal piece 41 and an upper metal piece 43. A cavity surface of the lower metal piece 41 includes a flat body portion 45, an inclined portion 47 curved upward along the edge of the body portion 45, and a flat portion 49 extending in the horizontal direction from the upper edge of the inclined portion 47. A cavity surface of the upper metal piece 43 includes a flat body portion 51, a projection 53 projecting downward into a triangle along the edge of the body portion 51, and a base portion 55 curved into an arc at the bottom of the projection 53 on the inner side of the upper metal piece 43. The projection 53 is provided with a sharp tip 53a.

As shown in FIG. 6A, an intermediate molded body 61 includes a paper honeycomb structure 63 obtained such that the first sheet 21 and the second sheet 23 are attached to the honeycomb structure 25, the first panel 13 placed on the upper side of the paper honeycomb structure 63, and the second panel 15 placed on the lower side of the paper honeycomb structure 63. The first panel 13 and the second panel 15 each have the overhang end longer than the end of the paper honeycomb structure 63 in the horizontal direction.

The following are the steps of molding the trunk board 9. First, as shown in FIG. 6A, the second panel 15 preliminarily heated is placed on the lower metal piece 41, the paper honeycomb structure 63 is placed on upper side of the second panel 15, and the first panel 13 preliminarily heated is placed on the upper side of the paper honeycomb structure 63.

As shown in FIG. 6B, when the upper metal piece 43 comes down, the intermediate molded body 61 is held between the body portion 51 of the upper metal piece 43 and the body portion 45 of the lower metal piece 41, and the edges of the first panel 13 and the second panel 15 are welded together so that the welded portion 35 is provided. Since the tip 53a of the projection 53 is sharp, the periphery of the welded portion 35 is cut off with the tip 53a. Namely, the step of forming the welded portion 35 and the step of cutting off the periphery of the welded portion 35 are performed simultaneously. At the same time, the curved surface 31 of the first panel 13 is shaped along the base portion 55 at the inner bottom of the projection 53 of the upper metal piece 43, and the curved surface 33 of the second panel 15 is shaped along the inclined portion 47 of the lower metal piece 47. As described above with reference to FIG. 3A, the edge of the curved surface 31 and the edge of the curved surface 33 are directly welded together to provide the welded portion 35.

Thereafter, the molding cut off at the welded portion 35 is taken out of the metal mold, so as to provide the trunk board 9 having a cross section shown in FIG. 3A.

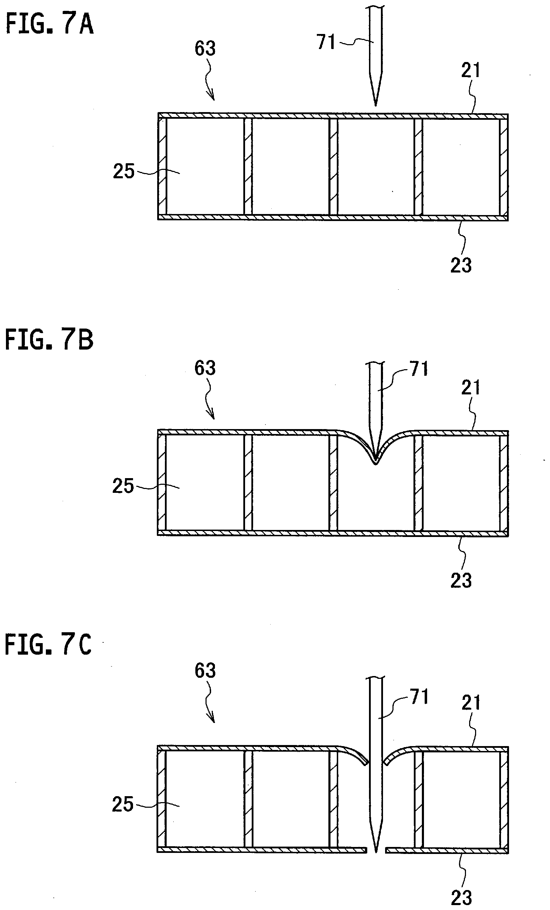

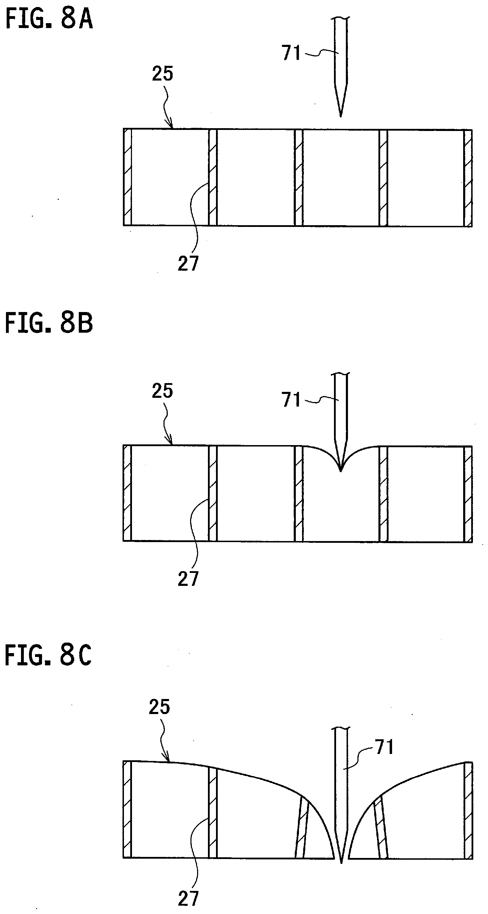

Next, with reference to FIG. 7 and FIG. 8, a comparison is made between the honeycomb structure 25 and the paper honeycomb structure 63 in which the first sheet 21 and the second sheet 23 are attached to the honeycomb structure 25 with regard to the deformation state during the step of cutting the respective structures in the thickness direction.

A cutting knife 71 is positioned above the paper honeycomb structure 63 as shown in FIG. 7A, the surface of the first sheet 21 located on the upper side of the paper honeycomb structure 63 is slit with the cutting knife 71 as shown in FIG. 7B, and the paper honeycomb structure 63 is then completely cut off with the cutting knife 71 in the thickness direction as shown in FIG. 7C.

Since the paper honeycomb structure 63 is obtained such that the openings on the upper and lower sides of the honeycomb structure 25 are covered and sealed with the first sheet 21 and the second sheet 23, the paper honeycomb structure 63 has high rigidity. Thus, as described above with reference to FIG. 7, the paper honeycomb structure 63 is not easily deformed when being cut off and divided with the cutting knife 71 in the thickness direction, so that the cutting step can be performed efficiently.

The following is the comparative case in which the openings on the upper and lower sides of the honeycomb structure 25 are not covered and sealed with the first sheet 21 and the second sheet 23. The cutting knife 71 is positioned above the honeycomb structure 25 as shown in FIG. 8A, the upper surface of the honeycomb structure 25 is slit with the cutting knife 71 as shown in FIG. 8B, and the honeycomb structure 25 is cut off with the cutting knife 71 in the thickness direction as shown in FIG. 8C. As compared with the case above, the cutting step cannot be carried out efficiently, since the honeycomb structure 25 is deformed upon being cut off with the cutting knife 71 in the thickness direction. The reason for this is that the rigidity of the honeycomb structure 25 is lower than that of the paper honeycomb structure 63 since the openings on the upper and lower sides of the honeycomb structure 25 are not covered and sealed with the first sheet 21 and the second sheet 23.

Although the first panel 13 and the second panel 15 shown in FIG. 3 and FIG. 4 are not applied with a surface covering, at least one of the front surface of the first panel 13 and the rear surface of the second panel 15 may be applied with a surface covering. Namely, only the front surface of the first panel 13 may be applied with a surface covering, or both the front surface of the first panel 13 and the rear surface of the second panel 15 may be applied with a surface covering. Examples of surface coverings include nonwoven fabric, napped fabric, a sheet of artificial leather, a film of synthetic resin, and a material obtained such that any of these materials is lined with a cushion material. Particularly, typical nonwoven fabric or 20 to 500 g/m² of needlepunch nonwoven fabric including polyester fibers or mixed fibers in which 0 to 20% by mass of polypropylene fibers are mixed with the polyester fibers is preferable. The application of such a surface covering can improve the external appearance and the texture when touched with the hand and fingers.

Although FIG. 3 and FIG. 4 illustrate the first panel 13 arranged on the upper side and the second panel 15 arranged on the lower side, the trunk board 9 may be provided with the second panel 15 arranged on the upper side and the first panel 13 arranged on the lower side.

Next, the operational effects are described below.
(1) The trunk board 9 (the layered board) includes the first and second panels 13 and 15 made of the thermoplastic material, and the reinforcing body 17 held between the first and second panels 13 and 15. The reinforcing body 17 is the cylinder assembly 19 in which the rows of the cylinders 29 made of paper are arranged in parallel.
   Since the reinforcing body 17 is the cylinder assembly 19 made of paper, the layered board has high rigidity resistant to high temperature conditions.
   In the conventional case, the layered board including the thermoplastic foam material causes a reduction in rigidity of the thermoplastic foam material when the layered board is subjected to high temperature. The present invention can prevent a reduction in rigidity of the reinforcing body 17 when kept at high temperature since the reinforcing body 17 is made of paper. Thus, the present invention can provide the layered board having high rigidity resistant to high temperature conditions.
(2) The first sheet 21 is placed between the first panel 13 and the cylinder assembly 19, and the second sheet 23 is placed between the second panel 15 and the cylinder assembly 19. The axial direction P of the respective cylinders 29 composing the cylinder assembly 19 conforms to the direction perpendicular to (intersecting) the horizontal plane of the first sheet 21 and the second sheet 23. The first sheet 21 on one side is attached to the cylinder assembly 19, and the first sheet 21 on the other side is welded to the first panel 13 with the thermoplastic layer interposed therebetween. The second sheet 23 on one side is attached to the cylinder assembly 19, and the second sheet 23 on the other side is welded to the second panel 15 with the thermoplastic layer interposed therebetween.
   The openings on the upper and lower sides of the respective cylinders 29 of the cylinder assembly 19 are covered with the first sheet 21 and the second sheet 23. The rigidity of the vertical walls 27 of the respective cylinders 29 composing the cylinder assembly 19 is thus increased due to the first sheet 21 and the second sheet 23 attached to the cylinder assembly 19. Accordingly, the vertical walls 27 of the respective cylinders 29 are prevented from collapsing with pressure (are not easily deformed) when the cylinder assembly 19 to which the first sheet 21 and the second sheet 23 are attached is cut off in the thickness direction of the trunk board 9 (the layered board). Further, the first sheet 21 and the first panel 13 can easily be welded together such that the thermoplastic material interposed therebetween is heated and melted, followed by cooling and solidification. Similarly, the second sheet 23 and the second panel 15 can easily be welded together such that the thermoplastic material interposed therebetween is heated and melted, followed by cooling and solidification.
(3) The reinforcing body 17 is the honeycomb structure 25. The honeycomb structure 25 is the assembly of the cylinders 29 having a hexagonal shape in a plan view defined by the vertical walls 27. Therefore, the cylinders 29 can be arranged tightly on the entire surface of the trunk board 9 (the layered board) without gap, so as to increase the volumetric efficiency of the cylinders 29. Further, the vertical walls 27 of the cylinders 29 are prevented from collapsing with pressure when the pressure load in the thickness direction is applied to the trunk board 9 (the layered board).
(4) The material included in the first panel 13, the material included in the second panel 15, the material bonding the first sheet 21 and the first panel 13, and the material bonding the second sheet 23 and the second panel 15 may be the same type of thermoplastic resin.
   The use of the same type of thermoplastic resin can increase the bonding intensity, as compared with the case of using different types of resin.
(5) The end of the first panel 13 has the curved surface 31 curved toward the end of the second panel 15. The end of the second panel 15 has the curved surface 33 curved toward the end of the first panel 13. The edge of the curved surface 31 of the first panel 13 and the edge of the curved surface 33 of the second panel 15 are directly welded together to provide the welded portion 35.

Since the edge of the curved surface 31 of the first panel 13 and the edge of the curved surface 33 of the second panel 15 are directly welded together to provide the welded portion 35, a hermetic seal at the welded portion 35 can be created. If any insertion such as the paper honeycomb structure 63 is present between the edge of the curved surface 31 and the edge of the curved surface 33, the property of the hermetic seal at the welded portion 35 is degraded, which may lead to permeation of water into the trunk board 9 through the welded portion 35.

If the periphery of the trunk board 9 (the layered board) is sharp, the user may feel uncomfortable when holding the periphery with the hand and fingers. The trunk board 9 (the layered board) can reduce the uncomfortableness of the user when holding with the hand and fingers due to the curved periphery.

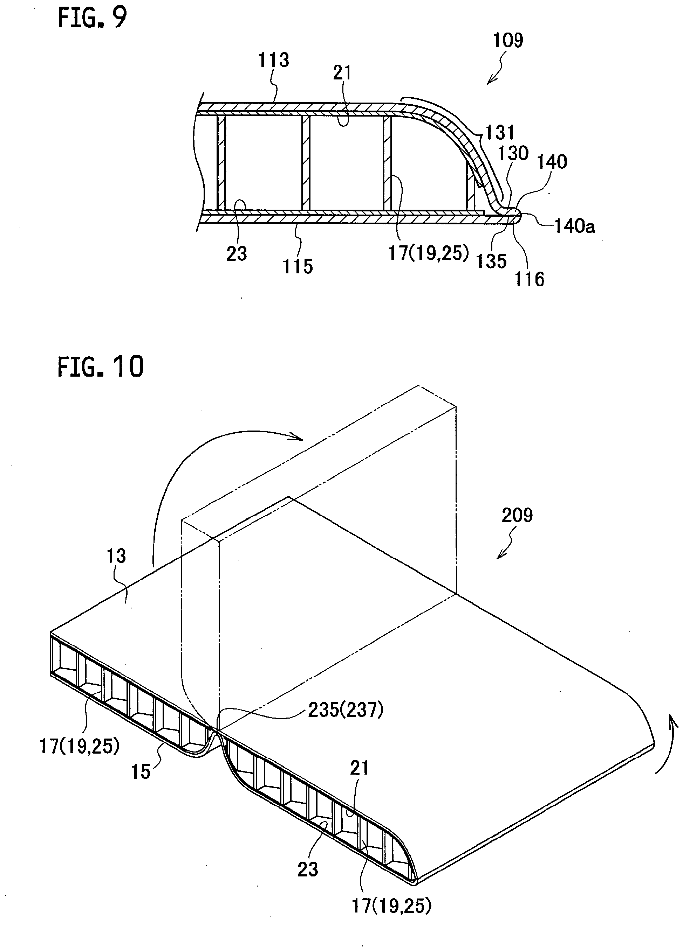

A trunk board 109 (a layered board) of the present invention is described below with reference to FIG. 9. The same elements are denoted by the same reference numerals, and overlapping explanations are not repeated below.

As shown in FIG. 9, the trunk board 109 includes a first panel 113 and a second panel 115. The end of the first panel 113 is provided with a curved surface 131 curved toward the end of the second panel 115. The second panel 115 extends straight to have a flat end. The edge of the curved surface 131 of the first panel 113 and the flat end of the second panel 115 are directly welded together to provide a welded portion 135. The trunk board 109 is described in more detail below.

The cylinder assembly 19 (the reinforcing body 17) having the honeycomb structure 25 is placed in the middle in the thickness direction of the trunk board 109.

The first sheet 21 is attached to the upper side of the honeycomb structure 25. In particular, the first sheet 21 includes a paper material such as kraft paper, and a thermoplastic layer (not shown) located on the upper surface of the paper material.

The first panel 113 is welded to the upper side of the first sheet 21 with the thermoplastic layer interposed therebetween. The materials included in the first panel 113, the thermoplastic layer, and the second panel 115 described below are the same as those in the first embodiment.

The resin included in the first panel 113, the resin included in the second panel 115, the resin bonding the first sheet 21 and the first panel 113, and the resin bonding the second sheet 23 and the second panel 115 are particularly preferably of the same type. However, the present invention is not limited thereto, and the respective resin materials may be different from each other.

The first sheet 21 on one side is attached to the honeycomb structure 25 (the cylinder assembly 19) with an adhesive, and the first sheet 21 on the other side is welded to the first panel 113 with the thermoplastic layer interposed therebetween.

The second sheet 23 is attached to the lower side of the honeycomb structure 25. In particular, the second sheet 23 includes a paper material such as kraft paper, and a thermoplastic layer (not shown) located on the lower surface of the paper material.

The second panel 115 is welded to the lower side of the second sheet 23 with the thermoplastic layer interposed therebetween.

The second sheet 23 on one side is attached to the honeycomb structure 25 (the cylinder assembly 19) with an adhesive, and the second sheet 23 on the other side is welded to the second panel 115 via the thermoplastic layer.

The end of the first panel 113 has the curved surface 131 curved toward the second panel 115 on the periphery of the trunk board 109, and the lower end 130 of the curved surface 131 is bent and then extends straight along the second panel 115. The second panel 115 extends straight to the end 116. The lower end 130 (the edge) of the curved surface 131 of the first panel 113 and the flat end 116 of the second panel 115 are welded together to provide the flat welded portion 135.

As shown in FIG. 9, a plate-like flange 140 is composed of the lower end 130 (the edge) of the curved surface 131 of the first panel 113 and the flat end 116 of the second panel 115. The tip 140a of the flange 140 is formed into a rounded arc-like shape in cross section. This reduces the uncomfortableness of the user when the tip 140a of the flange 140 is held with the hand and fingers. If the tip of the flange 140 is sharp, the user may feel uncomfortable because of a slight pain when the hand and fingers come into contact with the sharp tip, for example.

Next, the operational effects are described below.
(1) The end of the first panel 113 has the curved surface 131 curved toward the end of the second panel 115. The second panel 115 extends straight to have the flat end. The edge of the curved surface 131 of the first panel 113 and the flat end of the second panel 115 are directly welded together to provide the welded portion 135.

Since the end of the first panel 113 is curved, the uncomfortableness upon holding the peripheral edge with the hand and fingers is reduced. Further, since the second panel 115 is formed into a plate shape extending straight to the end, the user can easily hold the edge of the second panel 115.

Although FIG. 9 illustrates the first panel 113 arranged on the upper side and the second panel 115 arranged on the lower side, the trunk board 109 may be provided with the second panel 115 arranged on the upper side and the first panel 113 arranged on the lower side.

A trunk board 209 (a layered board) of the present invention is described below with reference to FIG. 10. The same are denoted by the same reference numerals, and overlapping explanations are not repeated below.

As shown in FIG. 10, a plurality of reinforcing bodies 17 (honeycomb structures 25, cylinder assemblies 19) are aligned on the horizontal plane of the trunk board 209 at a predetermined interval and held between the first panel 13 and the second panel 15.

The first panel 13 and the second panel 15 are directly welded together between one reinforcing body 17 and the other reinforcing body 17 adjacent to the one reinforcing body 17 to provide a welded portion 235 serving as a hinge 237. In particular, the first panel 13 is formed into a plate shape, and the second panel 15 has a curved surface at the middle portion curved toward the first panel 13. The first panel 13 and the middle portion of the second panel 15 are directly welded together to provide the welded portion 235 which serves as the hinge 237. As indicated by the arrows shown in FIG. 10, the trunk board 209 is bent upward on both right and left sides about the hinge 237 as a pivot. The bending direction is not limited to the upward direction, and the trunk board 209 may be bent in the direction opposite to that indicated by the arrows.

Next, the operational effects according to the third embodiment are described below.
(1) The plural reinforcing bodies 17 are aligned at a predetermined interval and held between the first panel 13 and the second panel 15. The first panel 13 and the second panel 15 are directly welded together between one reinforcing body 17 and the other reinforcing body 17 adjacent to the one reinforcing body 17 to provide the welded portion 235 serving as the hinge 237.

The trunk board 209 (the layered board) is bendable about the hinge 237. Since the hinge 237 is integrated with the trunk board 209 and is not necessarily prepared separately, the trunk board 209 (the layered board) having a simplified structure can be achieved.

Although FIG. 10 illustrates the first panel 13 arranged on the upper side and the second panel 15 arranged on the lower side, the trunk board 209 may be provided with the second panel 15 arranged on the upper side and the first panel 13 arranged on the lower side.

The present invention is not limited to the embodiments described above. For example, although the present invention uses the honeycomb structure 25 as the reinforcing body 17 (the cylinder assembly 19), a cylinder assembly in which a plurality of triangular prisms are connected together or a cylinder assembly in which a plurality of cylinders are connected together may be used.

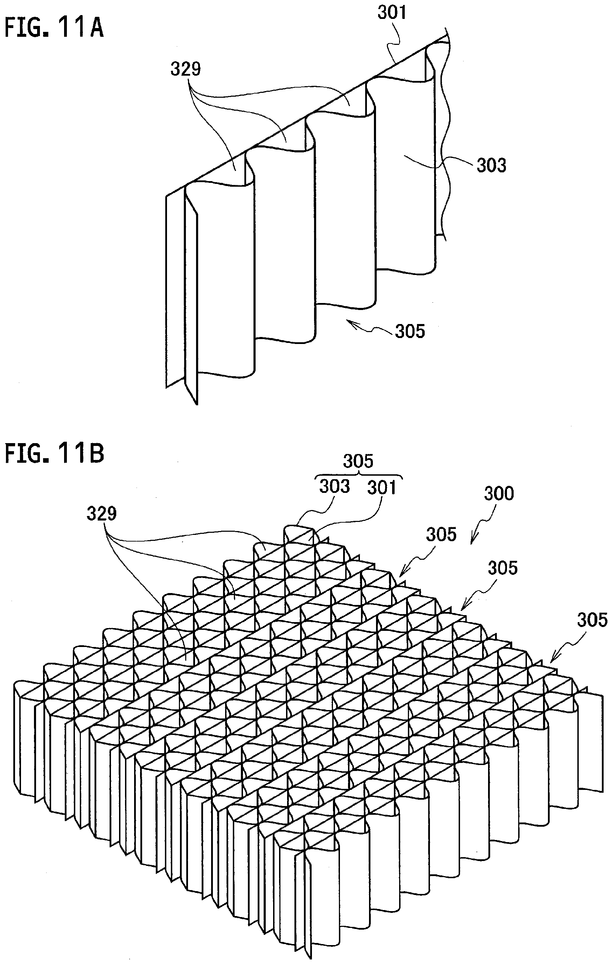

Alternatively, the reinforcing body 17 may be a cylinder assembly 300 shown in FIG. 11. As shown in FIG. 11A, a pair of a flat panel 301 made of paper and a wavelike panel 303 made of paper attached together forms a structure 305. The flat panel 301 and the wavelike panel 303 are assembled to provide cylinders 329. As shown in FIG. 11B, a plurality of structures 305 shown in FIG. 11A are sequentially arranged and connected together, so as to provide the cylinder assembly 300. The cylinders 329 composing the cylinder assembly 300 each have a substantially triangular cross section.

## Claims

1. A layered board comprising:
a first panel (13, 113) and a second panel (15, 115) each made of a thermoplastic material; and
a reinforcing body (17) placed between the first panel and the second panel,
the reinforcing body being a cylinder assembly (19) including plural rows of cylinders (29) made of paper arranged in parallel and defined by vertical wall (27) and hollow portions surrounded by the vertical walls; and
a first sheet (21) is placed between the first panel (13, 113) and the cylinder assembly, and a second sheet (23) is placed between the second panel (15, 115) and the cylinder assembly (19), wherein
an axial direction of the cylinders (29) composing the cylinder assembly (19) conforms to a direction intersecting a plane direction of the first sheet (21) and the second sheet (23);
one side of the first sheet (21) is attached to the cylinder assembly (19) and another side is welded to the first panel (13, 113) via a thermoplastic material;
one side of the second sheet (23) is attached to the cylinder assembly and another side is welded to the second panel (15, 115) via a thermoplastic material, and
an edge of the first panel (13, 113) and an edge of the second panel (15,115) are directly welded together to form a welded portion (35, 135, 235).

2. The layered board according to claim 1, wherein the reinforcing body (17) is a honeycomb structure (25).

3. The layered board according to claims 1 or 2, wherein the material included in the first panel (13, 113) and the second panel (15, 115), the material bonding the first sheet and the first panel, and the material bonding the second sheet and the second panel are a same type of thermoplastic resin.

4. The layered board according to any one of claims 1 to 3, wherein:
the first panel (13, 113) is provided at an end with a curved surface (31) curved toward an end of the second panel (15, 115);
the second panel (15, 115) is provided at the end with a curved surface (33) curved toward the end of the first panel (13, 113); and
an edge of the curved surface of the first panel and an edge of the curved surface of the second panel are directly welded together to form a welded portion (35, 135, 235).

5. The layered board according to any one of claims 1 to 3, wherein:
the first panel (113) is provided at an end with a curved surface (131) curved toward an end of the second panel (115);
the second panel (115) extends straight to have a flat end; and
an edge of the curved surface of the first panel and the flat end of the second panel are directly welded together to form a welded portion (135).

6. The layered board according to any one of claims 1 to 5, wherein:
a plurality of reinforcing bodies (17) are held between the first panel and the second panel at a predetermined interval, each of the reinforcing bodies being said reinforcing body; and
the first panel and the second panel are directly welded together between one reinforcing body and another reinforcing body adjacent to the one reinforcing body to provide a welded portion (235) serving as a hinge (237).

## Patentansprüche

1. Eine mehrschichtige Platte, aufweisend:
ein erstes Paneel (13, 113) und ein zweites Paneel (15, 115), welche jeweils aus einem thermoplastischen Material sind; und
einen Verstärkungskörper (17), welcher zwischen dem ersten Panel und dem zweiten Paneel platziert ist,
wobei der Verstärkungskörper eine Zylinderanordnung (19) ist, welche eine Mehrzahl an Reihen von Zylindern (29) aufweist, welche aus Papier sind, welche parallel angeordnet sind, und definiert sind mittels vertikaler Wand (27) und Hohlabschnitten, welche von den vertikalen Wänden umgeben sind; und
ein erstes Blatt (21) zwischen dem ersten Paneel (13, 113) und der Zylinderanordnung platziert ist, und ein zweites Blatt (23) zwischen dem zweiten Paneel (15, 115) und der Zylinderanordnung (19) platziert ist, wobei
eine axiale Richtung der Zylinder (29), welche die Zylinderanordnung (19) bilden, bildet eine Richtung, welche eine Flächenrichtung des ersten Blatts (21) und des zweiten Blatts (23) schneidet;
wobei eine Seite des ersten Blatts (21) an der Zylinderanordnung (19) angebracht ist, und eine andere Seite am ersten Paneel (13, 113) mittels eines thermoplastischen Materials verbunden ist;
wobei eine Seite des zweiten Blatts (23) an der Zylinderanordnung angebracht ist und eine andere Seite am zweiten Paneel (15, 115) mittels eines thermoplastischen Materials verbunden ist, und
ein Rand des ersten Paneels (13, 113) und ein Rand des zweiten Paneels (15, 115) direkt miteinander verbunden sind, um einen Verbindungsabschnitt (35, 135, 235) zu bilden.

2. Die mehrschichtige Platte nach Anspruch 1, wobei bei der Verstärkungskörper (17) eine Wabenstruktur (25) ist.

3. Die mehrschichtige Platte nach Anspruch 1 oder nach Anspruch 2, wobei das im ersten Paneel (13, 113) und zweiten Paneel (15, 115) eingeschlossene Material, das Material, welches das erste Blatt und das erste Paneel verbindet, und das Material, welches das zweite Blatt und das zweite Paneel verbindet, von einer gleichen Art von thermoplastischem Harz sind.

4. Die mehrschichtige Platte nach einem der Ansprüche 1-3, wobei:
das erste Paneel (13, 113) an einem Ende mit einer gekrümmten Fläche (31) bereitgestellt ist, welche in Richtung eines Endes des zweiten Paneels (15, 115) gekrümmt ist;
das zweite Paneel (15, 115) an dem Ende mit einer gekrümmten Fläche (33) bereitgestellt ist, welche in Richtung des Endes des ersten Paneels (13, 113) gekrümmt ist; und
wobei ein Rand der gekrümmten Fläche des ersten Paneels und einem Rand der gekrümmten Fläche des zweiten Paneels direkt miteinander verbunden sind, um einen Verbindungsabschnitt (35, 135, 235) zu bilden.

5. Die mehrschichtige Platte nach einem der Ansprüche 1-3, wobei:
das erste Paneel (113) an einem Ende mit einer gekrümmten Fläche (131), welche in Richtung eines Endes des zweiten Paneels (115) gekrümmt ist, bereitgestellt ist;
das zweite Paneel (115) sich gerade ausdehnt, um ein flaches Ende zu haben; und
ein Rand der gekrümmten Fläche des ersten Paneels und das flache Ende des zweiten Paneels direkt miteinander verbunden sind, um einen Verbindungsabschnitt (135) zu bilden.

6. Die mehrschichtige Platte nach einem der Ansprüche 1-5, wobei:
eine Mehrzahl an Verstärkungskörpern (17) zwischen dem ersten Paneel und dem zweiten Paneel in einem vorbestimmten Abstand gehalten werden, wobei jeder der Verstärkungskörper besagter Verstärkungskörper ist; und
das erste Paneel und das zweite Paneel zwischen einem Verstärkungskörper und einem anderen Verstärkungskörper, welcher benachbart zu dem einen Verstärkungskörper ist, direkt miteinander verbunden sind, um einen Verbindungsabschnitt (235), welcher als Gelenk (237) dient, bereitzustellen.

## Revendications

1. Plaque stratifiée comprenant :
un premier panneau (13, 113) et un second panneau (15, 115) constitués chacun d'un matériau thermoplastique ; et
un corps de renforcement (17) placé entre le premier panneau et le second panneau,
le corps de renforcement étant un ensemble de cylindres (19) incluant plusieurs rangées de cylindres (29) constitués de papier agencés en parallèle et définis par une paroi verticale (27) et des parties creuses entourées par les parois verticales ; et
une première feuille (21) est placée entre le premier panneau (13, 113) et l'ensemble de cylindres, et une seconde feuille (23) est placée entre le second panneau (15, 115) et l'ensemble de cylindres (19), dans lequel
une direction axiale des cylindres (29) constituant l'ensemble de cylindres (19) correspond à une direction coupant une direction de plan de la première feuille (21) et de la seconde feuille (23) ;
un côté de la première feuille (21) est fixé à l'ensemble de cylindres (19) et un autre côté est soudé au premier panneau (13, 113) par un matériau thermoplastique ;
un côté de la seconde feuille (23) est fixé à l'ensemble de cylindres et un autre côté est soudé au second panneau (15, 115) par un matériau thermoplastique ; et
un bord du premier panneau (13, 113) et un bord du second panneau (15, 115) sont soudés directement ensemble pour former une partie soudée (35, 135, 235).

2. Plaque stratifiée selon la revendication 1, dans laquelle le corps de renforcement (17) est une structure en nid d'abeille (25).

3. Plaque stratifiée selon les revendications 1 ou 2, dans laquelle le matériau inclus dans le premier panneau (13, 113) et le second panneau (15, 115), le matériau collant la première feuille et le premier panneau, et le matériau collant la seconde feuille et le second panneau sont un même type de résine thermoplastique.

4. Plaque stratifiée selon l'une quelconque des revendications 1 à 3, dans laquelle :
le premier panneau (13, 113) est pourvu à une extrémité d'une surface incurvée (31) incurvée vers une extrémité du second panneau (15, 115) ;
le second panneau (15, 115) est pourvu à l'extrémité d'une surface incurvée (33) incurvée vers l'extrémité du premier panneau (13, 113) ; et
un bord de la surface incurvée du premier panneau et un bord de la surface incurvée du second panneau sont soudés directement ensemble pour former une partie soudée (35, 135, 235).

5. Plaque stratifiée selon l'une quelconque des revendications 1 à 3, dans laquelle :
le premier panneau (113) est pourvu à une extrémité d'une surface incurvée (131) incurvée vers une extrémité du second panneau (115) ;
le second panneau (115) s'étend droit pour avoir une extrémité plate ; et
un bord de la surface incurvée du premier panneau et l'extrémité plate du second panneau sont soudés directement ensemble pour former une partie soudée (135).

6. Plaque stratifiée selon l'une quelconque des revendications 1 à 5, dans laquelle :
une pluralité de corps de renforcement (17) sont maintenus ensemble entre le premier panneau et le second panneau à un intervalle prédéterminé, chacun des corps de renforcement étant ledit corps de renforcement ; et
le premier panneau et le second panneau sont soudés directement ensemble entre un corps de renforcement et un autre corps de renforcement adjacent à l'un corps de renforcement pour fournir une partie soudée (235) servant de charnière (237).
